(19) Europäisches Patentamt
European Patent Office
Office européen des brevets

(11) EP 0 672 625 B1

(12) **EUROPÄISCHE PATENTSCHRIFT**

(45) Veröffentlichungstag und Bekanntmachung des Hinweises auf die Patenterteilung:
**29.10.1997 Patentblatt 1997/44**

(51) Int. Cl.6: **C02F 5/12**, C02F 5/14

(21) Anmeldenummer: **95102879.4**

(22) Anmeldetag: **01.03.1995**

# (54) Mittel zur Wasserbehandlung mit Polyasparaginsäure oder einem Derivat davon und Phosphonsäure

Compound for water treatment with polyaspartic acid or a derivative thereof and phosphonic acid

Produit pour traiter l'eau avec l'acide polyaspartie ou un de ses dérivés et l'acide phosphonique

(84) Benannte Vertragsstaaten:
**BE CH DE FR GB IT LI NL**

(30) Priorität: **14.03.1994 DE 4408478**

(43) Veröffentlichungstag der Anmeldung:
**20.09.1995 Patentblatt 1995/38**

(73) Patentinhaber: **BAYER AG**
**51368 Leverkusen (DE)**

(72) Erfinder:
- **Kleinstück, Roland, Dr.**
  **D-51467 Bergisch Gladbach (DE)**
- **Sicius, Hermann, Dr.**
  **D-40210 Düsseldorf (DE)**
- **Groth, Torsten, Dr.**
  **D-51061 Köln (DE)**
- **Joentgen, Winfried, Dr.**
  **D-50769 Köln (DE)**

(56) Entgegenhaltungen:
**WO-A-94/19288** **US-A- 5 116 513**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 672 625 B1

Printed by Rank Xerox (UK) Business Services
2.14.18/3.4

**Beschreibung**

Die Erfindung betrifft ein Mittel zur Wasserbehandlung sowie für die alkalische Reinigung sowie ein Verfahren zur Wasserbehandlung unter Verwendung dieses Mittels sowie ein Verfahren zur alkalischen Reinigung unter Verwendung dieses Mittels.

Bei der Nutzung von natürlichen Wässern für industrielle Zwecke, z.B. als Kühlwässer oder auch in industriellen Reinigungsverfahren, wird das eingesetzte Wasser physikalisch und/oder chemisch gezielt oder auch unbeabsichtigt verändert. So sind z.B. in offenen Umlaufkühlsystemen Temperaturveränderungen, Eindickung sowie eine pH-Erhöhung, die durch den Kohlendioxidaustrag im Kühlturm bewirkt wird, unvermeidbar. Bei der industriellen Reinigung, z.B. in der Lebensmittelindustrie, ist in vielen Anwendungen der Einsatz von Alkali, meist Natronlauge, in den Reinigerlösungen notwendig.

Sowohl durch Eindickung und pH-Erhöhung über $CO_2$-Austrag wie auch durch Natronlaugezusatz steigt die Konzentration an Härtebildnern, insbesondere Calcium- und Carbonationen, an. Wenn sich die natürlichen Wässer vor Einsatz im Gleichgewicht befanden (Kalk-Kohlensäure-Gleichgewicht), so führt ein Anstieg der Konzentration der Härtebildner zu einer Übersättigung. Zur Verhinderung von Wassersteinablagerungen (Intrustationen), z.B. auf Wärmeübertragungsflächen oder dem zu reinigenden Gut, ist dann der Zusatz von Additiven ("Steininhibitoren") nötig.

Ähnlich ist die Situation bei der Sekundärförderung im Erdölbereich:

Die eingesetzten Einpreßwässer müssen u.U. durch Additivzusatz behandelt werden, um eine Abscheidung von anorganischen Salzen wie Calciumcarbonat sowie Calcium-, Strontium-, Bariumsulfat in der Formation und eine dadurch resultierende Behinderung des Ölflusses zu unterbinden.

Ein weiterer, zum Teil sogar der überwiegende, Zweck des Additiveinsatzes bei der Wasserbehandlung ist der Schutz metallischer Werkstoffe vor Korrosion. Zum Beispiel ist bei Verwendung unlegierter Kohlenstoffstähle in offenen Umlaufkühlsystemen eine ausreichende Korrosionsinhibierung erwünscht, da die in solchen Systemen herrschenden Bedingungen (Sauerstoffsättigung, Salzanreicherung) zu einer Beschleunigung der Korrosion führen.

Die nach dem Stand der Technik eingesetzten Wasserbehandlungsmittel und alkalischen Reiniger bedürfen weiterer Verbesserungen:

Polyphosphate haben nur eine begrenzte Löslichkeit, so daß die Herstellung hochkonzentrierter Formulierungen beschränkt ist, und sind außerdem hydrolytisch instabil. Weiterhin wird ihr relativ hoher Phosphorgehalt bemängelt.

Phosphonate vom Typ Nitrilo-tris-methylenphosphonsäure und 1-Hydroxy-ethan1,1-diphosphonsäure sind gegenüber Polyphosphaten die technisch forgeschrittenen Produkte. Sie zeigen eine gute Hydrolysestabilität sowie eine gute Wirksamkeit als Steininhibitoren; haben allerdings einen relativ hohen Phosphorgehalt.

2-Phosphono-butan-1,2,4-tricarbonsäure weist gegenüber den anderen Phosphonaten noch eine verbesserte steininhibierende Wirksamkeit bei wesentlich erhöhter Stabilität gegenüber Hypochlorit und Hypobromit bzw. Chlor und Brom, die als Biozide und Desinfektionsmittel eingesetzt werden, auf. Der Phosphorgehalt dieses Produktes ist im Vergleich zu den anderen Phosphonaten erheblich reduziert.

Polyacrylate, Copolymere auf der Basis von Acrylsäure sowie andere analoge Polycarbonsäuren mit C-C-Ketten sind meist Phosphor-freie Produkte, haben aber den Nachteil der für viele Einsatzbereiche ungenügenden korrosions- und steininhibierenden Wirksamkeit.

Allen bisher genannten organischen Verbindungen ist eine nur geringe biologische Abbaubarkeit gemeinsam. Diese ist häufig eine Voraussetzung für ihren Einsatz, z.B. würde die Verwendung biologisch leicht abbaubarer Additive in offenen Umlaufkühlsystemen wegen der in solchen Systemen herrschenden Bedingungen zum Abbau der Additive noch im System führen. In anderen Anwendungen z.B. mit sehr geringen Verweilzeiten im System wird dagegen eine leichte biologische Abbaubarkeit weniger störend wirken.

Vorteilhaft ist eine biologisch leichte Abbaubarkeit in jedem Falle, wenn die Additive - was häufig geschieht - nach Gebrauch in den Vorfluter gelangen.

Daher ist die Entwicklung biologisch leicht bzw. leichter abbaubarer Additive für die Wasserbehandlung und für den Einsatz in alkalischen Reinigern ein technisch und ökologisch sinnvolles Ziel.

Ein erster Schritt dazu wurde durch die Entwicklung der einem biologischen Abbau zugänglichen Polycarbonsäure Polyasparaginsäure (PAS) gemacht. Die Wirkungen der PAS als Stein- und Korrosionsinhibitor sind jedoch unzureichend.

Die vorliegende Erfindung betrifft ein Mittel zur Wasserbehandlung sowie zum Einsatz in alkalischen Reinigern enthaltend Polyasparaginsäure oder ein Derivat davon und eine Phosphonsäure. In einer bevorzugten Ausführungsform liegen die Polyasparaginsäure bzw. deren Derivat und die Phosphonsäure in einem Gewichtsverhältnis von 10:90 bis 90:10 vor. Die Polyasparaginsäure wird vorzugsweise als Salz, insbesondere als Natrium- oder Kaliumsalz eingesetzt. Es ist aber auch möglich, ein Derivat der Polyasparaginsäure einzusetzen, beispielsweise das Anhydrid der Polyasparaginsäure, nämlich Polysuccinimid. Dieses kann sich unter geeigneten Bedingungen während der Anwendung durch Hydrolyse in Polyasparaginsäure umformen. Die Phosphonsäure kann als freie Säure oder als Salz, insbesondere als Natrium- oder Kaliumsalz, eingesetzt werden. Für die Zwecke der vorliegenden Erfindung werden als Polyasparaginsäure und Phosphonsäure auch Salze dieser Säuren verstanden.

Die Herstellung und Verwendung von Polyasparaginsäure (PAS) und ihrer Derivate ist seit langem Gegenstand zahlreicher Veröffentlichungen und Patente.

So kann die Herstellung durch thermische Polykondensation von Asparaginsäure erfolgen (J. Org. Chem. <u>26</u>, 1084 (1961)).

US-A 4 839 461 (= EP-A 0 256 366) beschreibt die Herstellung von Polyasparaginsäure aus Maleinsäureanhydrid, Wasser und Ammoniak. Maleinsäureanhydrid wird in wäßrigem Medium unter Zugabe von konzentrierter Ammoniak-Lösung in das Monoammoniumsalz umgewandelt.

In einer bevorzugten Ausführungsform wird die Polyasparaginsäure dadurch hergestellt, daß man Maleinsäuremonoammoniumsalz, vorzugsweise bei 150 bis 180°C in einem Reaktor bei einer Verweilzeit von 5 bis 300 Minuten einer thermischen, gegebenenfalls einer kontinuierlichen Polymerisation unterwirft und das erhaltene Polysuccinimid durch Hydrolyse zu Polyasparaginsäure bzw. einem Salz davon umsetzt.

Die Polyasparaginsäure enthält in einer bevorzugten Ausführungsform im wesentlichen wiederkehrende Einheiten folgender Struktur:

a)

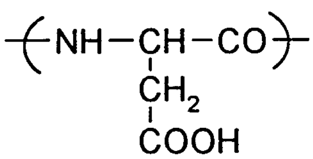

(α-Form)

und

b)

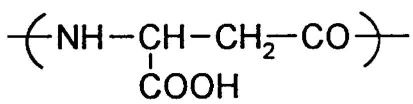

(ß-Form)

Im allgemeinen liegt der Anteil der β-Form bei mehr als 50 %, insbesondere mehr als 70 %.

Zusätzlich zu den wiederkehrenden Polyasparaginsäureeinheiten a) und b) können weitere wiederkehrende Einheiten enthalten sein, z.B.:

c) Äpfelsäureeinheiten der Formel

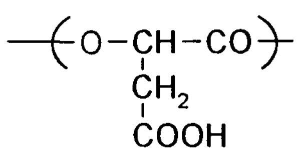

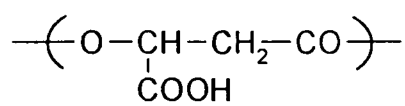

d) Maleinsäureeinheiten der Formel

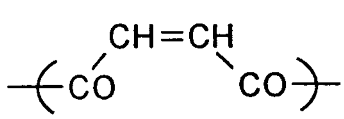

e) Fumarsäureeinheiten der Formel

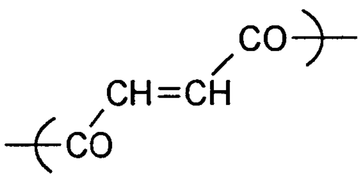

Bevorzugt werden Polymere mit einem Molekulargewicht nach gelpermeationschromatographischer Analyse von 500 bis 10.000, bevorzugt 1.000 bis 5.000, besonders bevorzugt 2.000 bis 4.000.

Bevorzugte Phosphonsäuren sind Phosphonocarbonsäuren, insbesondere Phosphonocarbonsäuren mit 2 bis 10 C-Atomen. Besonders bevorzugte derartige Phosphonocarbonsäuren sind Phosphonobernsteinsäure, Phosphonopropionsäure und vor allem 2-Phosphonobutan-1,2,4-tricarbonsäure, im folgenden abgekürzt als PBTC. PBTC ist der Wirkstoff in dem von der Bayer AG hergestellten Produkt Bayhibit® AM. Weitere geeignete Phosphonsäuren sind beispielsweise derartige, die eine Amino- oder Hydroxyfunktion aufweisen, insbesondere Nitrilo-trismethylenphosphonsäure sowie die höheren Analoga wie z.B. Ethylendiamintetrakis(methylenphosphonsäure) und Diethylentriaminpentakis(methylenphosphonsäure) sowie ihre N-Oxide; 1-Hydroxyethan-1,1-diphosphonsäure, Hydroxyphosphonoessigsäure.

Dabei können die erfindungsgemäßen Mittel auch in Kombination mit einer oder mehreren Substanzen, die sich für den jeweiligen Einsatzzweck als nützlich erwiesen haben, eingesetzt werden. Beispiele für solche weiteren Komponenten sind:

Zinksalze, Molybdate, Borate, Silikate, Azole (z.B. Tolyl- oder Benzotriazol), weitere Phosphonsäuren, Polymere und Copolymere auf Basis der Acrylsäure, der Methacrylsäure, der Maleinsäure, Ligninsulfonate, Tannine, Phosphate, Komplexbildner, Citronensäure, Weinsäure, Gluconsäure, Tenside, Biozide, Desinfektionsmittel. Für den Fachmann ist es dabei selbstverständlich, daß an Stelle von Säuren (z.B. "Phosphonsäuren") auch deren Salze ("Phosphonate") und umgekehrt eingesetzt werden können.

Die erfindungsgemäßen Mittel können vielfältig genutzt werden, beispielsweise als Steininhibitoren (scale inhibitor) und Sequestriermittel wie auch als Korrosionsinhibitoren. Einsatzgebiete solcher Mittel können z.B. sein: Wasserbehandlung (z.B. Behandlung von Kühlwässern, Prozeßwässern, Gaswaschwässern, Einpreßwässern bei der sekundären Ölförderung und Wasserbehandlung im Bergbau) sowie industrielle und institutionelle Reinigeranwendungen (z.B. Behälter- und Gerätereinigung in der Lebensmittelindustrie, Flaschenreinigung, für institutionelle Geschirreiniger und Waschmittel).

Die vorliegende Erfindung betrifft weiterhin ein Verfahren zur Wasserbehandlung, welches dadurch gekennzeichnet ist, daß man das erfindungsgemäße Mittel in das zu behandelnde Wasser einträgt.

Weiterhin betrifft die vorliegende Erfindung ein Verfahren zur alkalischen Reinigung, dadurch gekennzeichnet, daß man als Inkrustationsinhibitor/Sequestriermittel das erfindungsgemäße Mittel einsetzt.

Das Verfahren zur Wasserbehandlung soll im folgenden an Beispielen erläutert werden:
Z.B. werden die erfindungsgemäßen Mittel zur Verhinderung von Ablagerungen und Belägen beim Einsatz in Kühlsystemen mit Frischwasserkühlung dem einlaufenden Wasser in Konzentrationen zwischen etwa 0,1 und 10 mg/l Wirkstoff zugesetzt.

Im Kühlkreisläufen erfolgt die Dosierung der Additive zum Stein- und/oder Korrosionsschutz häufig mengenabhängig bezogen auf das Zusatzwasser. Die Konzentrationen liegen zwischen etwa 1 und 50 mg/l Wirkstoffe im umlaufenden Kühlwasser.

Bei der destillativen Meerwasserentsalzung in MSF (multi stage flash) und VP-(vapour compression)Anlagen werden durch Additivzusätze von etwa 1 bis 5 mg/l Wirkstoffe zum zulaufenden Meerwasser Verkrustungen der Wärmetauscheroberflächen verhindert.

Die erforderlichen Dosierungen bei RO (reverse osmose)-Anlagen liegen wegen der verfahrensbedingten niedrigeren maximalen Temperaturen im allgemeinen deutlich niedriger.

Das Verfahren zum Einsatz der erfindungsgemäßen Mittel bei der alkalischen Reinigung wird wie folgt erläutert:

Die zur Inkrustationsinhibierung und Sequestrierung bei der alkalischen Reinigung eingesetzten Wirkstoffkonzentrationen richten sich insbesondere nach den technischen und physikalischen Bedingungen wie z.B. pH-Werten, Verweilzeiten, Temperaturen, Wasserharten.

Während im schwächer alkalischen Bereich (pH bis etwa 10) bei Temperaturen unter 60°C und kürzeren Verweilzeiten Wirkstoffkonzentrationen von deutlich unter 100 mg/l, im allgemeinen 5 bis 80 mg/l, häufig ausreichend sind, werden bei höheren Alkalikonzentrationen und Temperaturen Dosierungen von z.T. über 100 mg/l bis 300 mg/l erforderlich.

In den folgenden Beispielen wurde eine Polyasparaginsäure (PAS) mit einen, Molekulargewicht von ca. 3000 eingesetzt (als Na-Salz). Der β-Anteil lag bei ca. 70 %

**Beispiel 1**

Bestimmung des Threshold-Effektes
(Inhibierung der Kristallisation von Calciumcarbonat aus übersättigten wäßrigen Lösungen)

**1. Parameter des verwendeten synthetischen Leitungswassers**

| Wasserparameter | | |
|---|---|---|
| Konzentration der Ionen (mg/l) | $Ca^{2+}$ | 100 |
| | $Mg^{2+}$ | 12 |
| | $Na^{+}$ | 145 |
| | $HCO_3^-$ | 195 |
| | $SO_4^{2-}$ | 197 |
| | $Cl^-$ | 177 |
| Wasserhärte (gerechnet als ppm $CaCO_3$) | | 300 |

Die Einstellung des pH-Wertes auf 11 wird durch Natronlaugezusatz bewirkt.
Die Versuchstemperatur beträgt 60°C.

**2. Versuchsdurchführung**

Die Inhibitoren werden in bestimmter Konzentration (z.B. 50 mg/l) zu dem obenerwähnten Wasser gegeben. Die Lösungen werden in Glasflaschen mit einem Volumen von je 1 Liter gefüllt, und noch je ein Glasstab pro Flasche zugesetzt.

Dann werden die Flaschen verschlossen und bei der obengenannten Temperatur 24 h lang gelagert.

Nach Versuchsende untersucht man den Glasstab auf mögliche Inkrustationen sowie den Flaschenboden auf Niederschlag (Schlamm).

Schließlich wird die Lösung durch ein 0,45 µm Membranfilter filtriert und dann mit EDTA-Lösung zur Bestimmung der Resthärte titriert. Die Resthärte (%) wird über folgende Gleichung berechnet:

$$\text{Stabilisierte Resthärte (\%)}=100.\ \frac{R_x\text{-}R_o}{R_a\text{-}R_o}$$

$R_x$ = Resthärte der Probe X
$R_a$ = Anfangshärte
$R_o$ = Resthärte der Blindprobe.

Die optische Bewertung der Bildung von Inkrustationen und/oder Schlamm wird wie folgt vorgenommen:
- : keine Inkrustation oder Schlamm
0: Inkrustation    X: Schlamm
Indices
1: schwach    2: mittel    3: stark

**3. Ergebnisse**

Diese sind in der Tabelle aufgeführt. Sie zeigen, daß unter Bedingungen, wie sie z.B. in der Warmwasserstation bei der Flaschenreinigung auftreten, durch Kombination von PBTC und PAS Mischungen mit synergistischer Wirkung erhältlich sind.

Tabelle 1

| Inhibitor | Konz. an Wirkstoff (mg/l) | Aussehen der Lösung nach 24 h | Stabilisierte Resthärte (%) |
|---|---|---|---|
| Blindprobe | - | $O_2$ | O |
| PBTC | 50 | $X_1$ | 78,9 |
| PBTC : PAS 3 : 1 | 50 | $X_1$ | 80,7 |
| PBTC : PAS 1 : 3 | 50 | $X_1$ | 86,7 |
| PAS | 50 | $O_3X_{0-1}$ | 23,5 |

**Beispiel 2**

Korrosionsinhibierung von C-Stahl

**1. Parameter des verwendeten Wassers siehe Beispiel 1**

**2. Versuchsdurchführung**

Je 4 gebeizte Stahlrohrringe aus ST 35 (Durchmesser 35 mm, Länge 40 mm, Gewicht ca. 70 g) werden an einem Kunststoffrührer befestigt und in einem Aquarium (24 cm hoch, 30 cm lang, 22 cm breit) mit einem Volumen von 12 Liter Kühlwasser bei Raumtemperatur mit einer Geschwindigkeit von 0,6 m/s bewegt.

Zu Versuchsbeginn werden die Aquariengefäße mit Kühlwasser gefüllt, das jeweils die doppelte der angegebenen Inhibitorkonzentration enthält.

Während des Versuches wird dann mit einer Geschwindigkeit von 0,5 l/h kontinuierlich Kühlwasser mit der angegebenen Inhibitorkonzentration durch die Aquarien hindurchgepumpt.

Nach 4 Tagen werden die Rohrringe wiederum gebeizt und die Gewichtsverluste ermittelt.

Beizung der Rohrringe:

1. Vor dem Versuch werden

a) die Rohrringe in Dichlorethan und Aceton gewaschen,
b) ca. 1 Min in 10 %iger HCl bei 80°C gebeizt,
c) mit Leitungswasser, Aqua dem. und 2 x Aceton gespült,
d) im warmen Luftstrom (Fön) getrocknet, im Exsikkator aufbewahrt und gewogen

2. Nach dem Versuch werden

a) die Rohrringe mit Leitungswasser gut gewaschen,
b) 30 s in 10 %iger HCl bei 80°C gebeizt
c) wie 1. c)
d) wie 1. d)

Korrosionsgeschwindigkeit:

1) in $g/m^2/d$: (Gewichtsverlust (g) - 0,0037) x 27,02

**3. Versuchsergebnisse in Wasser aus Beispiel 1**

| Inhibitor | Gesamtkonz. an Wirkstoffen (mg/l) | Abtrag (mm/a ≙ g/m²/d) | |
|---|---|---|---|
| PBTC | 20 | 0,23 | 4,6 |
| PBTC : PAS | | | |
| 80 : 20 | 20 | 0,21 | 4,2 |
| 60 : 40 | 20 | 0,14 | 2,9 |
| 40 : 60 | 20 | 0,92 | 18,7 |
| PAS | 20 | 0,69 | 14,1 |
| Vergleich ohne Inhibitor | - | ca. 0,7-1,0 | ca. 14-20 |

**4. Versuchsergebnisse in Wasser, das die 3-fache Salzkonzentration von Beispiel 1 aufwies**

| Inhibitor | Gesamtkonz. an Wirkstoffen (mg/l) | Abtrag (mm/a ≙ g/m²/d) | |
|---|---|---|---|
| PBTC | 20 | 0,12 | 2,5 |
| PBTC : PAS | | | |
| 80 : 20 | 20 | 0,087 | 1,8 |
| 60 : 40 | 20 | 0,079 | 1,6 |
| 20 : 80 | 20 | 0,28 | 5,7 |
| PAS | 20 | 0,26 | 5,2 |
| Vergleich ohne Inhibitor | - | ca. 0,25-0,5 | ca. 5-10 |

## Patentansprüche

**1.** Mittel zur Wasserbehandlung sowie zum Einsatz in alkalischen Reinigern enthaltend Polyasparaginsäure oder ein Derivat davon und eine Phosphonsäure.

**2.** Mittel nach Anspruch 1, dadurch gekennzeichnet, daß die Polyasparaginsäure bzw. deren Derivat und die Phosphonsäure im Gewichtsverhältnis von 90:10 bis 10:90 vorliegen.

**3.** Mittel nach wenigstens einem der vorhergehenden Ansprüche, dadurch gekennzeichnet, daß das Polyasparaginsäurederivat ein Salz der Polyasparaginsäure oder ein Polyasparaginsäureanhydrid ist.

**4.** Mittel nach wenigstens einem der vorhergehenden Ansprüche, dadurch gekennzeichnet, daß die Polyasparaginsäure im wesenilichen eine β-Polyasparaginsäure mit einem Molekulargewicht von 1.000 bis 10.000 ist.

**5.** Mittel nach wenigstens einem der vorhergehenden Ansprüche, dadurch gekennzeichnet, daß die Phosphonsäure eine Phosphonocarbonsäure ist.

**6.** Mittel nach Anspruch 5, dadurch gekennzeichnet, daß die Phosphonocarbonsäure 3 bis 10 Kohlenstoffatome aufweist und insbesondere eine Phosphonobutantricarbonsäure ist.

**7.** Mittel nach Anspruch 5, dadurch gekennzeichnet, daß die Phosphonocarbonsäure 2-Phosphono-butan-1,2,4-tricarbonsäure ist.

8. Mittel nach wenigstens einem der vorhergehenden Ansprüche, dadurch gekennzeichnet, daß die Phosphonsäure wenigstens eine Hydroxyfunktion aufweist oder zur Gruppe der N-haltigen Phosphonsäuren gehört..

9. Verfahren zur Wasserbehandlung, dadurch gekennzeichnet, daß man dem zu behandelnden Wasser ein Mittel nach wenigstens einem der vorhergehenden Ansprüche zusetzt.

10. Verfahren zur alkalischen Reinigung, dadurch gekennzeichnet, daß man als Inkrustationsinhibitor/Sequestriermittel ein Mittel nach wenigstens einem der vorhergehenden Ansprüche einsetzt.

11. Verwendung des Mittels gemäß Anspruch 1, bei der Erdölförderung.

**Claims**

1. Composition for water treatment, and for use in alkaline cleansers, containing polyaspartic acid or a derivative thereof and a phosphonic acid.

2. Composition according to Claim 1, characterized in that the polyaspartic acid or derivative thereof and the phosphonic acid are present in the weight ratio of 90:10 to 10:90.

3. Composition according to at least one of the preceding claims, characterized in that the polyaspartic acid derivative is a salt of polyaspartic acid or an anhydride of polyaspartic acid.

4. Composition according to at least one of the preceding claims, characterized in that the polyaspartic acid is essentially a β-polyaspartic acid having a molecular weight of from 1,000 to 10,000.

5. Composition according to at least one of the preceding claims, characterized in that the phosphonic acid is a phosphonocarboxylic acid.

6. Composition according to Claim 5, characterized in that the phosphonocarboxylic acid has 3 to 10 carbon atoms and, in particular, is a phosphonobutanetricarboxylic acid.

7. Composition according to Claim 5, characterized in that the phosphonocarboxylic acid is 2-phosphonobutane-1,2,4-tricarboxylic acid.

8. Composition according to at least one of the preceding claims, characterized in that the phosphonic acid has at least one hydroxyl function or belongs to the group of the N-containing phosphonic acids.

9. Process for water treatment, characterized in that a composition according to at least one of the preceding claims is added to the water to be treated.

10. Process for alkaline cleaning, characterized in that a composition according to at least one of the preceding claims is used as encrustation inhibitor/sequestrant.

11. Use of the composition according to Claim 1, in the extraction of mineral oil.

**Revendications**

1. Produit pour le traitement des eaux et pour l'utilisation dans des produits de nettoyage alcalins, contenant de l'acide polyaspartique ou l'un de ses dérivés et un acide phosphonique.

2. Produit selon la revendication 1, caractérisé en ce que l'acide polyaspartique ou son dérivé et l'acide phosphonique sont présents en proportions relatives en poids de 90:10 à 10:90.

3. Produit selon au moins une des revendications qui précèdent, caractérisé en ce que le dérivé de l'acide polyaspartique est un sel de cet acide ou un anhydride polyaspartique.

4. Produit selon au moins une des revendications qui précèdent, caractérisé en ce que l'acide polyaspartique consiste essentiellement en un acide β-polyaspartique au poids moléculaire de 1 000 à 10 000.

5. Produit selon au moins une des revendications qui précèdent, caractérisé en ce que l'acide phosphonique consiste en un acide phosphonocarboxylique.

6. Produit selon la revendication 5, caractérisé en ce que l'acide phosphonocarboxylique contient de 3 à 10 atomes de carbone et consiste plus spécialement en un acide phosphonobutanetricarboxylique.

7. Produit selon la revendication 5, caractérisé en ce que l'acide phosphonocarboxylique consiste en l'acide 2-phosphonobutane-1,2,4-tricarboxylique.

8. Produit selon au moins une des revendications qui précèdent, caractérisé en ce que l'acide phosphonique porte au moins une fonction hydroxy ou appartient au groupe des acides phosphoniques contenant de l'azote.

9. Procédé pour le traitement des eaux, caractérisé en ce qu'on utilise à l'eau à traiter un produit selon au moins une des revendications qui précèdent.

10. Procédé de nettoyage alcalin, caractérisé en ce que l'on utilise en tant qu'agent antitartre/séquestrant un produit selon au moins une des revendications qui précèdent.

11. Utilisation du produit selon la revendication 1 à l'extraction du pétrole.